# EUROPEAN PATENT SPECIFICATION

(11) **EP 3 760 587 B1**
(45) Date of publication and mention of the grant of the patent: **04.05.2022**
(21) Application number: 20183210.2
(22) Date of filing: 30.06.2020
(51) Int. Cl.: C02F 1/461, F25D 23/12

(54) **A WATER DISPENSER WITH ALKALINE WATER PRODUCTION FUNCTION AND A METHOD FOR USING SAID DISPENSER**
WASSERSPENDER MIT ALKALISCHER WASSERERZEUGUNGSFUNKTION UND VERFAHREN ZUR VERWENDUNG DES WASSERSPENDERS
DISTRIBUTEUR D'EAU DOTÉ D'UNE FONCTION DE PRODUCTION D'EAU ALCALINE ET PROCÉDÉ D'UTILISATION DU DISTRIBUTEUR

(30) Priority: 04.07.2019 TR 201909987
(43) Date of publication of application: 06.01.2021
(73) Proprietor: Vestel Beyaz Esya Sanayi ve Ticaret A.S., 45030 Manisa (TR)
(72) Inventor: OZDENIZ, Hakan, 45030 Manisa (TR); ASIK, Rustem, 45030 Manisa (TR)
(74) Representative: Cayli, Hülya

(56) References cited:
- EP-A1- 0 669 285
- CN-A- 106 175 434
- JP-A- H09 239 006
- JP-A- 2017 053 529

## Description

### TECHNICAL FIELD

The present invention relates to a water dispenser with alkaline (hydrogen) water production function, which is suitable for use in refrigeration devices; and an alkaline water production method applicable to the water dispenser.

### BACKGROUND OF THE INVENTION

pH (potential for hydrogen) value is a measure of unit which specify acidity / alkaline concentration of a solution, and it ranges from 0 to 14. The oxalic acid increase in the water makes the water acidic, and the hydrogen ions increase makes the water alkaline. ORP, also called as redox potential, is a measure of oxidizing or reducing power of a solution in millivolts (mV). Water with a positive ORP value indicates oxidation, i.e. rusting or rotting effects thereof, while water with a negative ORP indicates antirust, i.e. antioxidant properties thereof. Therefore, pH and ORP values determine the quality of water. When compared to pure water; hydrogen or alkaline water contains a high amount of dissolved H2 and is more basic than the pure water and therefore has a high pH (pH>8,5) and a low reduction potential (ORP<-300 mV). Tap water and other types of water have a positive ORP between +250mV to +400 mV, which means that the water has no oxidation prevention or reduction potential. However, alkaline water is known to have an ORP value between -200mV to -500mV depending on the pH chosen and the amount of minerals in the water. This indicates that alkaline water has a very high oxidation-reduction power, that is, an antioxidant property. Human body tries to keep the pH of body liquid within about 7,365. Drinking alkaline water prevents acidity increase, which occurs in body physically, and supports homeostasis (maintaining normal values in the internal environment of organism) function of the body. Therefore, alkaline water consumption has increased all over the world recently.

The known state of art includes various systems which produce alkaline water, and one of them is disclosed in JP2017053529. The system disclosed in said document is provided in a refrigeration device, and produces alkaline water as a result of electrolysis of water, enables the water to be delivered to an alkaline water tank and collected therein, wherein the consequential oxygen gas from the electrolysis process is discharged out of the refrigeration device. However, since the system comprises a separate alkaline water tank and the oxygen is discharged, the tank occupies a lot of space in the refrigeration device and causes various application difficulties.

### BRIEF DESCRIPTION OF THE INVENTION

The present invention provides a water dispenser with alkaline water production function, as defined in claim 1; and an alkaline water production method applicable to the water dispenser, as defined in claim 11; wherein the water dispenser is suitable for use in a refrigeration device having at least one refrigeration compartment and at least one door for allowing access into the refrigeration compartment, such that the water dispenser is positioned at an inner side of the door facing the refrigeration compartment. The water dispenser comprises at least a first reservoir suitable for filling with water; at least a second reservoir suitable for filling with water and located in a bottom part of the first reservoir so as to be closer to a base of the refrigeration device; at least one electrolysis unit which is located between the first reservoir and the second reservoir and has:
- at least one membrane blocking water passage to prevent water in the first reservoir and the second reservoir from mixing with each other while allowing H⁺ ion to pass between the first reservoir and the second reservoir,
- at least one cathode preferably made of a platinum coated titanium sheet and positioned at a side of the membrane facing the first reservoir so as to contact the water inside the first reservoir, and
- at least one anode preferably made of a platinum coated titanium sheet and positioned at a side of the membrane facing the second reservoir so as to contact the water inside the second reservoir;
at least one power source which is in connection with the anode and cathode and applies current to the anode and cathode to generate an electrolysis reaction in the water inside the first reservoir and the second reservoir to produce alkaline water in the first reservoir, wherein H⁺ ions formed at the anode can move through the membrane towards the cathode; at least one discharge unit for discharging the alkaline water formed inside the first reservoir; at least one input unit which allows the user to select a hardness value and to activate an alkaline water production process; at least a first sensor which is located in the first reservoir and allows measuring an amount of H⁺ ions, the pH, the ORP value or dissolved H₂ values in the water inside the first reservoir; and at least one control unit which is in connection with the input unit and the first sensor and controls the power source based on the data received from the input unit and the first sensor so that the amount of H⁺ ions, the pH, the ORP value or dissolved H₂ values in the water formed inside the first reservoir is adjusted.

### OBJECT OF THE INVENTION

An object of the present invention is to provide a water dispenser with alkaline water production function, which is suitable for use in refrigeration devices, and a corresponding alkaline water production method. Another object of the present invention is to provide a water dispenser for producing alkaline water according to values determined by the user, and a corresponding alkaline water production method. A further object of the present invention is to provide a water dispenser in which the alkaline water production function is performed quickly and efficiently, and a corresponding alkaline water production method.

Yet another object of the present invention is to provide a water dispenser for feeding the O₂ gas created during the alkaline water production process to the refrigeration compartment of the refrigeration device, and a corresponding alkaline water production method.

### DESCRIPTION OF THE DRAWINGS

Exemplary embodiments of the water dispenser with alkaline water production function and the refrigeration device comprising the water dispenser according to the present invention are illustrated in the attached drawings, in which:

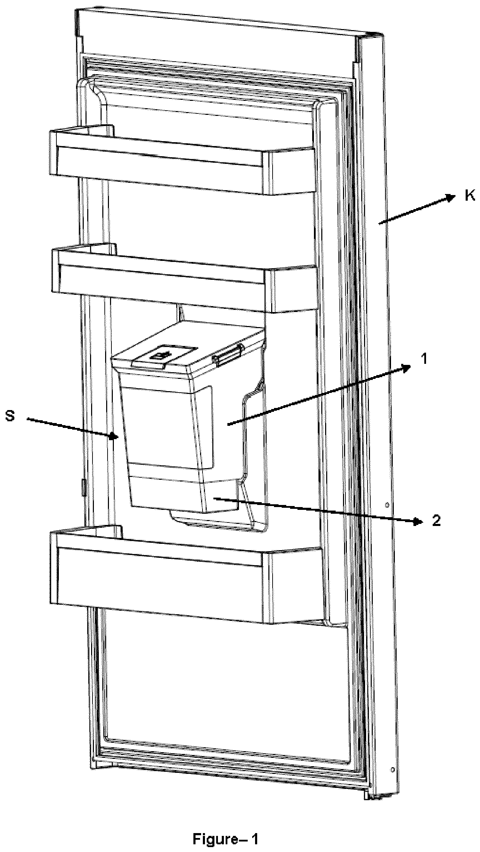

Figure 1 is a perspective view of the developed water dispenser applied to the door of the refrigeration device.

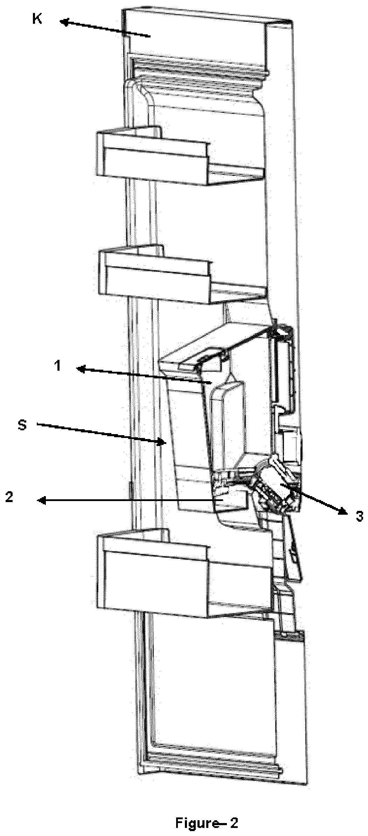

Figure 2 is a sectional view of the developed water dispenser applied to the door of the refrigeration device.

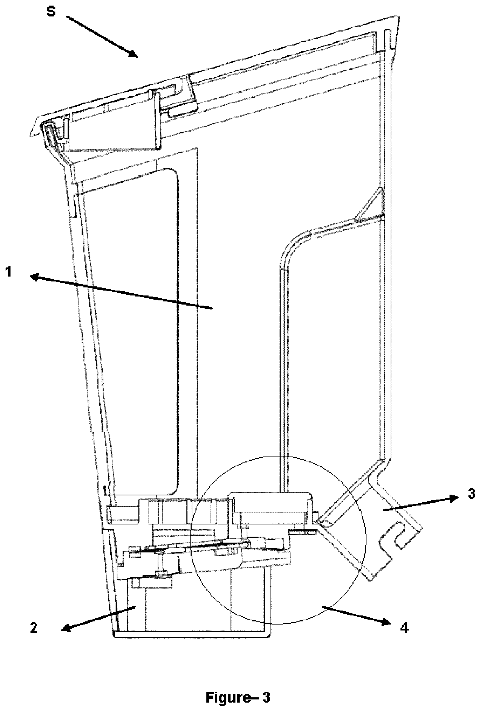

Figure 3 is a sectional view of the developed water dispenser.

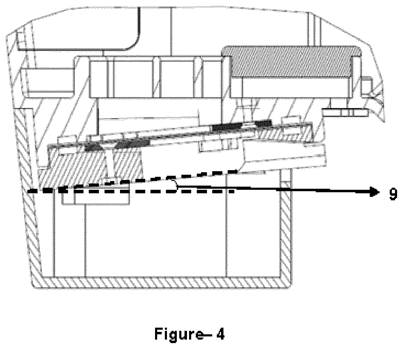

Figure 4 is another sectional and detailed view of the developed water dispenser.

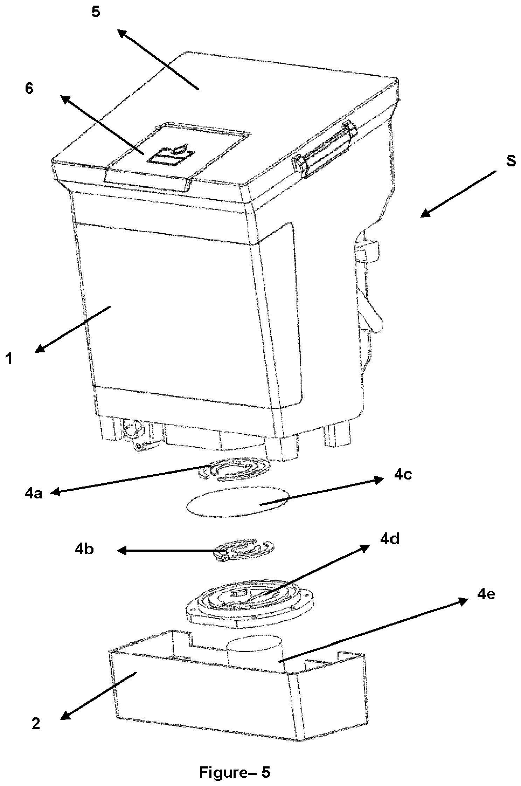

Figure 5 is an exploded view of the developed water dispenser.

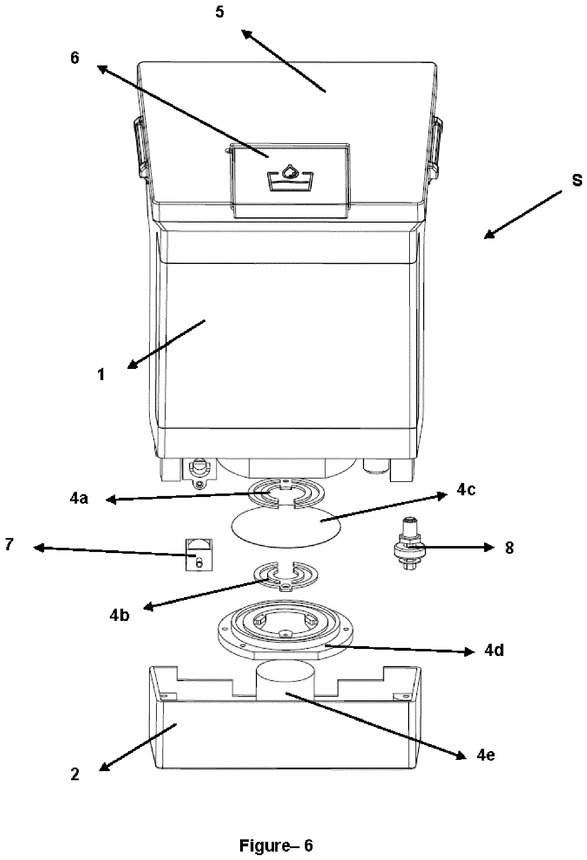

Figure 6 is another exploded view of the developed water dispenser.
Figure 7 is a sectional view of the second reservoir of the developed water dispenser according to an embodiment of the invention.
Figure 8 is a graphical view of the time-dependent alkalinity change of water in an embodiment of the developed water dispenser.

All the parts illustrated in figures are individually assigned a reference numeral and the corresponding terms of these numbers are listed below:

| | |
|---|---|
| Door | (K) |
| Water dispenser | (S) |
| First reservoir | (1) |
| Second reservoir | (2) |
| Discharge unit | (3) |
| Electrolysis unit | (4) |
| Cathode | (4a) |
| Anode | (4b) |
| Membrane | (4c) |
| First cover | (4d) |
| Liquid absorbent material | (4e) |
| Second cover | (5) |
| Third cover | (6) |
| Valve | (7) |
| Second sensor | (8) |
| Angle | (9) |
| First curve | (10) |
| Second curve | (11) |

### DESCRIPTION OF THE INVENTION

When compared to pure water; hydrogen or alkaline water contains a high amount of dissolved H₂ and is more basic than the pure water and therefore has a high pH (pH>8,5) and a low reduction potential (ORP<-300 mV). Tap water and other types of water have a positive ORP value between +250mV to +400 mV, which means that the water has no oxidation prevention or reduction potential. However, alkaline water is known to have an ORP value between -200mV to -500mV depending on the pH chosen and the amount of minerals in the water. This indicates that alkaline water has a very high oxidation-reduction power, that is, an antioxidant property. Human body tries to keep the pH of body liquid within about 7,365. Since drinking alkaline water prevents acidity increase, which occurs in body physically, and supports homeostasis function of the body, some systems are required to provide the users with alkaline water. Therefore, the present invention provides a water dispenser with alkaline (hydrogen) water production function, which is suitable for use in household refrigeration devices; a refrigeration device comprising the water dispenser; and a corresponding alkaline water production method.

The water dispenser (S) according to the present invention with alkaline water production function, which is suitable for use in a refrigeration device (not shown in the figures) having at least one refrigeration compartment (not shown in the figures) and at least one door (K) for allowing access into the refrigeration compartment, such that the water dispenser (S) is positioned at an inner side of the door (K) facing the refrigeration compartment, comprises: at least a first reservoir (1) suitable for filling with water; at least a second reservoir (2) suitable for filling with water and located in a bottom part of the first reservoir (1) so as to be closer to a base of the refrigeration device, wherein the second reservoir (2) can be attached and removed by the user to said door (K); at least one electrolysis unit (4) which is located between the first reservoir (1) and the second reservoir (2) and has:
- at least one (positive-ion permeable) membrane (4c) blocking water passage to prevent water in the first reservoir (1) and the second reservoir (2) from mixing with each other while allowing H⁺ ion to pass between the first reservoir (1) and the second reservoir (2),
- at least one cathode (4a) preferably made of a platinum coated titanium sheet and positioned at a side of the membrane (4c) facing the first reservoir (1) so as to contact the water inside the first reservoir (1), and
- at least one anode (4b) preferably made of a titanium sheet and positioned at a side of the membrane (4c) facing the second reservoir (2) so as to contact the water inside the second reservoir (2);
at least one power source (not shown in the figures) which is in connection with the anode (4b) and cathode (4a) and applies voltage to the anode (4b) and cathode (4a) at the same or different, constant or varying values to generate an electrolysis reaction in the water inside the first reservoir (1) and the second reservoir (2) so that H⁺ ions formed in the anode (4b) (in the second reservoir (2)) are moved through the membrane to the cathode (4a) (to the first reservoir (1)) to produce alkaline (hydrogen) water in the first reservoir (1); at least one discharge unit (3) for discharging the alkaline water formed inside the first reservoir (1) preferably out of the refrigeration device; at least one input unit (not shown in the figures) which allows the user to select a hardness value (the hardness value may comprise at least one of the values of ORP, the pH or the amount of H⁺ ions, or dissolved H₂ values) and/or to activate an alkaline water production process; at least a first sensor (not shown in the figures) which is located in the first reservoir (1) and allows measuring an amount of H⁺ ions, the pH, the ORP value or dissolved H₂ values in the water inside the first reservoir (1); and at least one control unit (not shown in the figures) which is in connection with the input unit and the first sensor and controls the power source based on the data received from the input unit and the first sensor so that the amount of H⁺ ions, the pH, the ORP value or dissolved H₂ values in the water formed inside the first reservoir is adjusted.

According to the invention, the invention, the user can select a hardness value by means of the input unit. The hardness value may comprise at least one of the desired pH value of the water, the ORP value, H⁺ ion value or dissolved H₂ values. The control unit controls the power source based on the data of H+ ion amount in water inside the first reservoir (1) which is received by the first sensor and the data received from the input unit, thereby controlling the amount of current supplied to the anode (4b) and cathode (4a). In order to perform alkaline water production process, the first reservoir (1) and the second reservoir (2) should contain water. The water filling process into the first reservoir (1) and the second reservoir can be performed manually by the user or can be performed automatically by drawing water from a mains/reservoir by the system. Electrolysis process is initiated after energizing (supplying current to) the anode (4b) and cathode (4a), and H+ ions produced in the second reservoir (2) pass through the membrane and reach the first reservoir (1) so that the water inside the first reservoir (1) becomes alkaline. After completion of said process, water inside the first reservoir (1) can be used by the user by discharging the water out of water dispenser (S) through the discharge unit (3).

Herein is also described a refrigeration device, e.g. a refrigerator, which has at least one refrigeration compartment; at least one door (K) for allowing access into the refrigeration compartment; and least one water dispenser (S) located at an inner side of the door (K) facing the refrigeration compartment and comprising:
- at least a first reservoir (1) suitable for filling with water;
- at least a second reservoir (2) suitable for filling with water and located in a bottom part of the first reservoir (1) so as to be closer to a base of the refrigeration device, wherein the second reservoir (2) can be attached and removed by the user to said door (K);
- at least one electrolysis unit (4) which is located between the first reservoir (1) and the second reservoir (2) and has: at least one (positive-ion permeable) membrane (4c) blocking water passage to prevent water in the first reservoir (1) and the second reservoir (2) from mixing with each other while allowing H⁺ ion to pass between the first reservoir (1) and the second reservoir (2), at least one cathode (4a) preferably made of a platinum coated titanium sheet and positioned at a side of the membrane (4c) facing the first reservoir (1) so as to contact the water inside the first reservoir (1), and at least one anode (4b) preferably made of a platinum coated titanium sheet and positioned at a side of the membrane (4c) facing the second reservoir (2) so as to contact the water inside the second reservoir (2);
- at least one power source (not shown in the figures) which is in connection with the anode (4b) and cathode (4a) and applies voltage to the anode (4b) and cathode (4a) at the same or different, constant or varying values to generate an electrolysis reaction in the water inside the first reservoir (1) and the second reservoir (2) so that H⁺ ions formed in the anode (4b) (in the second reservoir (2)) are moved through the membrane to the cathode (4a) (to the first reservoir (1)) to produce alkaline (hydrogen) water in the first reservoir (1);
- at least one discharge unit (3) for discharging the alkaline water formed inside the first reservoir (1) out of the refrigeration device;
- at least one input unit (not shown in the figures) which allows the user to select a hardness value and to activate an alkaline water production process;
- at least a first sensor (not shown in the figures) which is located in the first reservoir (1) and allows measuring at least one of the values of pH, ORP, dissolved H₂ values and/or amount of dissolved H⁺ ions in the water inside the first reservoir (1); and
- at least one control unit which is in connection with the input unit and the first sensor and controls the power source based on the data received from the input unit and the first sensor so that the amount of H⁺ ions, the pH, the ORP value or dissolved H2 values in the water formed inside the first reservoir is adjusted.

The power source may be an external power source provided at the refrigeration device for performing the electrolysis process or it may be a power circuit for delivering the power received from energy supply of the refrigeration device into the electrolysis unit (4). The discharge unit (3) can be triggered for example by a button or the like, which is provided on a surface of the door (K) facing the outer environment, so that the alkaline water can be discharged in accordance with the user demand. The input unit may be any input unit that allows the user to input command/data for the refrigerator. Moreover, the control unit may be a control unit that controls all functions of the refrigeration device.

In a preferred embodiment of the invention, the water dispenser (S) comprises at least a second cover (5) which covers upper surface of the first reservoir (1); at least a third cover (6) which is smaller than the second cover (5), located on the second cover (5), can be opened/closed easily, and allows the user to fill the first reservoir (1) with water; and at least a first cover (4d) which enables the electrolysis unit to be located between the first reservoir (1) and the second reservoir (2) and also allows water passage between the first reservoir (1) and the second reservoir (2) by means of the holes thereon.

In a preferred embodiment of the invention, the first sensor is located at the first reservoir at a point close to the base of the first reservoir, for example, at most 2 cm above the base of the first reservoir, or on the base of the first reservoir, such that it remains in the water inside the first reservoir (1).

In a preferred embodiment of the invention, there is provided at least a third sensor (not shown in the figures) for measuring pH, ORP and/or contamination values of the acidic water formed inside the second reservoir (2), the third sensor being in connection with the control unit and preferably located at the base of the second reservoir (2). In said embodiment, the control unit compares a measurement value received by the third sensor with a threshold value; and if the measurement value exceeds the threshold value, informs the user aurally and/or written by means of at least one warning unit of the refrigeration device. In said embodiment, the second reservoir (2) is removable and thus the user is enabled to remove the second reservoir (2) and change the water therein, according to said informing process.

In another preferred embodiment of the invention, there is provided at least one pump (not shown in the figures) which is in connection with the second reservoir (2) and the control unit and allows the water inside the second reservoir (2) to be discharged out of the second reservoir (2) based on a command received from the control unit. In said embodiment, if the measurement value received by the third sensor is above the threshold value, the control unit activates the pump such that water inside the second reservoir (2) is discharged into a water tank (not shown in the figures) provided in the refrigeration device or an evaporation pan (not shown in the figures) provided in the refrigeration device.

In order to perform electrolysis process, the first reservoir (1) and the second reservoir (2) are required to contain an amount of water sufficient to contact with the cathode (4a) and the anode (4b). For that reason, in a preferred embodiment of the invention, there is provided at least a second sensor (8) for controlling water level inside the second reservoir (2). The second sensor (8) is in connection with the control unit, and thanks to said embodiment, water can be supplemented from the first reservoir (1) to the second reservoir (2) by means of at least one valve (7) located between the first reservoir and the second reservoir, when the water level inside the second reservoir (2) decreases below a threshold value.

In the embodiments where the second reservoir (2) is required to be removed by the user, since the second sensor (8) will no longer be in contact with the water, the control unit can detect decrease of water inside the second reservoir (2) based on a signal from the second sensor (8). In order to solve this problem, the water dispenser (S) of the invention comprises at least a fourth sensor which is preferably a magnetic, optic or mechanic sensor, in connection with the control unit, and transmits a warning signal to the control unit as soon as the second reservoir (2) is removed. In said embodiment, the control unit detects removal of the second reservoir (2) and the valve (7) is prevented from operating.

In a preferred embodiment of the invention, the second reservoir (2) is in connection with a water mains (not shown in the figures), independently of the first reservoir (1), via a second valve (not shown in the figures) controllable by the control unit. In said embodiment, if the water level inside the second reservoir (2) decreases below the threshold value, the control unit opens the second valve to provide water supplement.

In the water dispenser (S) of the present invention, since the anode (4b) is located at the upper part of the second reservoir (2), the anode (4b) cannot contact with the water when the amount of water inside the second reservoir (2) decreases, and so, the second reservoir (2) should be full of water in order for the anode (4b) to contact with the water. With the aim of eliminating said problem, in a preferred embodiment of the invention, there is provided at least one liquid absorbent material (4e) between the anode (4b) and the base of the second reservoir (2), which can be attached and removed by the user to the second reservoir (2) and preferably made of a cotton or fiber material. The liquid absorbent material (4e) located between the anode (4b) and the base of the second reservoir (2) is preferably positioned such that it can be attached and removed and/or replaced. By this way, water at the base of the second reservoir (2) can be delivered to the anode (4b), therefore the second reservoir (2) does not required to be full of water. In another preferred embodiment of the invention, instead of the liquid absorbent material (4e), at least one water distribution unit (not shown in the figures) is provided at the second reservoir (2) for the same purpose. The water distribution unit delivers the water at the base of the second reservoir (2) onto the anode (4b) and enables the electrolysis process to be performed. The water distribution unit may comprise said pump for drawing water from the base of the second reservoir (2), and at least one delivering unit in connection with the pump for delivering / spraying the drawn water onto the anode (4b). While the electrolysis process takes place, O₂ gas is formed on the anode (4b) side and H₂ gas is formed on the cathode (4a) side. As the cathode (4a) is located at the base of the first reservoir (1), the H₂ gas formed can easily be separated from the cathode (4a) and mixed into the water. Since the anode (4b) is located at the top of the second reservoir (2), the O₂ gas is trapped between the anode (4b) and the membrane (4c) and cannot be separated easily. The non-separated O₂ gas trapped between the anode (4c) and the membrane (4c) decreases conductivity, thus reducing efficiency of the electrolysis. For that reason, in a preferred embodiment of the invention, in order to separate the O₂ gas formed in the anode (4b) easily, the anode (4b) is positioned with respect to the bottom plane of the second reservoir such that there is an angle (9) greater than 0° and less than 90° in between. In an embodiment of the invention, in order to deliver the O₂ gas to the refrigeration compartment, at least one gas delivery mechanism (not shown in the figures) is placed at the first reservoir (1) in which the anode (4b) is located, the gas delivery mechanism preferably comprising at least one hole and gas delivery pipe. Thanks to the gas delivery mechanism, the O₂ gas is delivered into the inner compartment, and the O₂ gas delivered into the inner compartment of the refrigeration device contributes to freshness of food.

The present invention also provides a method suitable for use in the water dispenser (S) or the refrigeration apparatus, the method comprising the steps of: filling the first reservoir (1) and the second reservoir (2) with water and selecting a hardness value by the user via the input unit and activating an alkaline water production process; monitoring, by the control unit, the data received from the first sensor, and enabling a voltage to be applied to the anode (4b) and cathode (4a) at the same or different, constant or varying values by the power source based on the data received from the first sensor, wherein said data is the pH, the ORP, the H⁺ ion amount or dissolved H₂ values, and thus, creating an electrolysis reaction at the water inside the first reservoir (1) and the second reservoir (2); producing alkaline water in the first reservoir (1) following the passage of H+ ions, which are formed at the anode (4b), through the membrane (4c) towards the cathode (4a); and according to the data received from the first sensor monitored by the control unit, terminating the process by turning off the power source when a desired water hardness level is reached.

As a result of tests conducted, it has been observed that the water added to the first reservoir (1) reaches a certain ORP, pH and dissolved H₂ value in a certain period of time, and then the values remain constant even if the electrolysis process continues. There are maximum ORP, pH and H2 values that the water can reach according to its properties. Accordingly, in a preferred embodiment of the invention, the user is informed if the water added to the first reservoir (1) cannot reach the desired pH, ORP and dissolved H₂ values within a desired period of time.

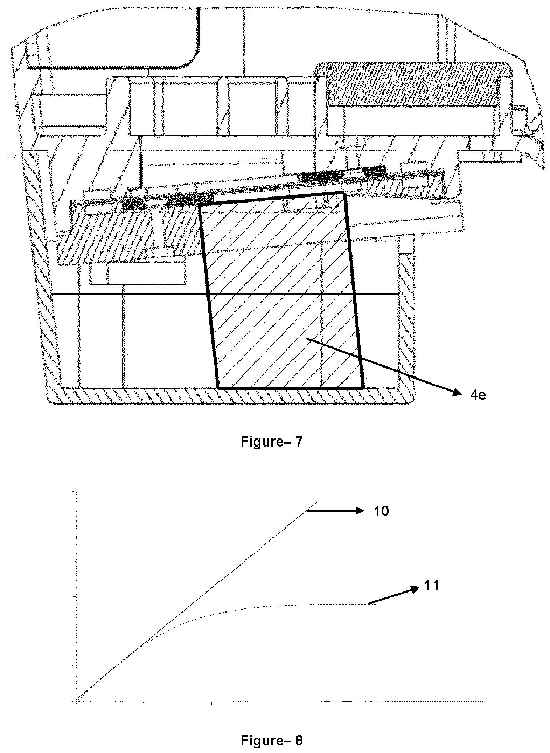

By means of the first sensor, pH, ORP and dissolved H₂ values of the water can be measured instantaneously, and these values are monitored by the control unit. The control unit monitors and records the received data instantaneously preferably via the first sensor. Therefore, change curves of pH, ORP and dissolved H₂ values are created by the control unit. Figure 8 illustrates an exemplary change graph. Vertical axis of said graph presents pH, ORP and/or dissolved H₂ values of water inside the first reservoir (1) while the horizontal axis thereof presents time. After creating the change curves of pH, ORP and/or dissolved H₂ values - time as provided in the graph, slopes of the curves are calculated and controlled by the control unit. Based on the change in the slopes, it is checked whether pH, ORP and dissolved H₂ values remain constant. When the change curve is similar to the second curve (11), the control unit determines that the value is constant if the slope is below a threshold value because slope of the curve is an approximate value to zero. For example, when the desired pH is 9, if pH of the water remains constant after a certain period of time, the control unit determines that the value remains constant as in the second curve (11). In this case, the user is informed that the adjusted values cannot be reached. When the curve is similar to the first curve (10), the control unit determines that the slope of the curve is positive. The control unit provides the user with audio and/or written information that the desired value will be reached after the system operates for a while.

In an embodiment of the invention, the control unit monitors the change in the voltage value supplied by the power source and in the pH, ORP and dissolved H₂ values of the water, and accordingly, a graph of the change is created. Change of the slope is controlled by calculating the slope of the curve and changing the applied voltage. By examining the slope of the curve, it can be examined whether increasing the applied voltage changes the slope.

In an embodiment of the invention, in case the alkaline water present in the first reservoir (1) reaches the level desired by the user but cannot be discharged; the control unit automatically activates the power source to keep current pH, ORP values of the water constant. For example, when user demands water at pH 9, pH value of water will decrease over time if the electrolysis process is terminated but the water is not discharged. In order to keep the pH value constant at 9 as desired, the control unit enables proper voltage to be delivered to the anode (4b) and cathode (4a) via the power source. In said embodiment, preferably, voltage amount applied to the anode (4b) and cathode (4a) while bringing the water to the desired values is higher than the voltage amount that is required to keep desired water levels constant.

In a preferred embodiment of the invention, the control unit controls the power source such that the water reaches the values desired by the user as soon as possible.

In a preferred embodiment of the invention, during the electrolysis process, the pH, ORP or dissolved H₂ values are monitored and controlled by the control unit instantaneously, and time dependent curves of said values are created. Therefore, maximum pH, ORP and dissolved H₂ values that can be reached in a certain period of time and the time required to reach the values desired by the user can be calculated.

In a preferred embodiment of the invention, in order to reach pH, ORP or dissolved H₂ values desired by the user, first a certain voltage is applied to the anode (4b) and cathode (4a) by the control unit via the power source, and then, if the desired values cannot be reached, the voltage is increased and the change is controlled.

Thanks to the water dispenser (S) and the refrigeration device comprising the water dispenser (S), alkaline water can be produced with ORP, pH and dissolved H₂ values selected by the user; obtained alkaline water values can be maintained; freshness of the foods in the refrigeration device can be maintained by delivering the O2 gas formed during the production of alkaline water to the inner compartment; and the user can be informed when the water reaches the desired alkaline properties.

## Claims

1. A water dispenser (S) with alkaline water production function, which is suitable for use in a refrigeration device having at least one refrigeration compartment and at least one door (K) for allowing access into the refrigeration compartment, such that the water dispenser (S) is positioned at an inner side of the door (K) facing the refrigeration compartment, **characterized by** comprising: at least a first reservoir (1) suitable for filling with water; at least a second reservoir (2) suitable for filling with water and located in a bottom part of the first reservoir (1), wherein the second reservoir (2) can be attached and removed by the user to said door (K); at least one electrolysis unit (4) which is located between the first reservoir (1) and the second reservoir (2) and has:
o at least one membrane (4c) blocking water passage to prevent water in the first reservoir (1) and the second reservoir (2) from mixing with each other while allowing H⁺ ion to pass between the first reservoir (1) and the second reservoir (2),
o at least one cathode (4a) positioned at a side of the membrane (4c) facing the first reservoir (1) so as to contact the water inside the first reservoir (1), and
o at least one anode (4b) positioned at a side of the membrane (4c) facing the second reservoir (2) so as to contact the water inside the second reservoir (2);
at least one power source which is in connection with the anode (4b) and cathode (4a) and applies voltage to the anode (4b) and cathode (4a) at the same or different, constant or varying values to generate an electrolysis reaction in the water inside the first reservoir (1) and the second reservoir (2) to produce alkaline water in the first reservoir (1), wherein
H⁺ ions formed at the anode (4b) can move through the membrane (4c) towards the cathode (4a);
at least one discharge unit (3) for discharging the alkaline water formed inside the first reservoir (1); at least one input unit which allows the user to select a hardness value, wherein the hardness value is defined as one of the desired pH value of the water, the ORP value, the amount of H⁺ ion value and dissolved H₂ values, and to activate an alkaline water production process; at least a first sensor which is located in the first reservoir (1) and allows measuring an amount of H⁺ ions, the pH, the ORP value or dissolved H₂ values in the water inside the first reservoir (1); and
at least one control unit which is in connection with the input unit and the first sensor and controls the power source based on the data received from the input unit and the first sensor so that the amount of H⁺ ions, the pH, the ORP value or dissolved H₂ values inside the first reservoir is adjusted.

2. A water dispenser (S) according to claim 1, **characterized in that** the water dispenser (S) comprises at least a third sensor for measuring pH, ORP and/or contamination values of the acidic water formed inside the second reservoir (2), the third sensor being in connection with the control unit so that the control unit informs the user audio and/or written by means of at least one warning unit of the refrigeration device, if the received measurement value exceeds a threshold value.

3. A water dispenser (S) according to claim 2, **characterized in that** the water dispenser (S) comprises at least one pump which is in connection with the second reservoir (2) and the control unit and allows the water inside the second reservoir (2) to be discharged out of the second reservoir (2) based on a command sent by the control unit, if the measurement value received by the third sensor exceeds the threshold value.

4. A water dispenser (S) according to any of the preceding claims, **characterized in that** the water dispenser (S) comprises at least one valve (7) which is located between the first reservoir (1) and the second reservoir (2) and is in connection with the control unit, and at least a second sensor (8) for controlling water level inside the second reservoir (2), the second sensor (8) being in connection with the control unit so that water can be supplemented from the first reservoir (1) to the second reservoir (2) by activating at least one valve (7) by the control unit when the water level inside the second reservoir (2) decreases below a threshold value.

5. A water dispenser (S) according to claim 4, **characterized in that** the water dispenser (S) comprises at least a fourth sensor which is in connection with the control unit and transmits a warning signal to the control unit as soon as the second reservoir (2) is removed.

6. A water dispenser (S) according to any of the preceding claims, **characterized in that** the second reservoir (2) is in connection with a water mains via a second valve controllable by the control unit.

7. A water dispenser (S) according to any of the preceding claims, **characterized in that** the water dispenser (S) comprises at least one liquid absorbent material (4e) which is located between the anode (4b) and the base of the second reservoir (2) and can be attached and removed by the user to the second reservoir (2).

8. A water dispenser (S) according to any of the preceding claims, **characterized in that** the water dispenser (S) comprises at least one water distribution unit which is located at the second reservoir (2) and enables the water at the base of the second reservoir (2) to be delivered onto the anode (4b).

9. A water dispenser (S) according to any of the preceding claims, **characterized in that** the anode (4b) is positioned with respect to the bottom plane of the second reservoir such that there is an angle (9) greater than 0° and less than 90° in between the surface of the anode facing the bottom of the second reservoir and bottom plane.

10. A water dispenser (S) according to any of the preceding claims, **characterized in that** the water dispenser (S) comprises at least one gas delivery mechanism which is located at the first reservoir (1) and enables the O₂ gas formed in the anode (4b) to be delivered to the refrigeration compartment.

11. A method suitable for using a water dispenser (S) according to the any of the preceding claims, **characterized by** comprising the steps of: filling the first reservoir (1) and the second reservoir (2) with water and selecting a hardness value by the user via the input unit wherein the hardness value is defined as one of the desired pH value of the water, the ORP value, the amount of H⁺ ion value and dissolved H₂ values, and activating an alkaline water production process; monitoring, by the control unit, the data received from the first sensor, wherein said data is the pH, the ORP, the H⁺ ion amount or dissolved H₂ values, and enabling a voltage to be applied to the anode (4b) and cathode (4a) at the same or different, constant or varying values by the power source based on the data received from the first sensor, and thus, creating an electrolysis reaction at the water inside the first reservoir (1) and the second reservoir (2); producing alkaline water in the first reservoir (1) wherein H+ ions, which are formed at the anode (4b), pass through the membrane (4c) towards the cathode (4a); and according to the data received from the first sensor monitored by the control unit terminating the process by turning off the power source when a desired hardness is reached.

12. A method according to claim 11, **characterized in that** the method comprises the steps of: recording, by the control unit, the data received instantaneously via the first sensor; creating change curves of the pH, ORP and/or dissolved H₂ values of the water inside the first reservoir (1) based on these data; calculating and controlling slopes of the curves, and based on the obtained slope data, controlling whether the pH, ORP and dissolved H₂ values remain constant; and warning the user if the slope is below a threshold value.

13. A method according to any of the claims 11 or 12, **characterized in that** the method comprises the steps of: monitoring, by the control unit, the change in the voltage value supplied by the power source and in the pH, ORP and dissolved H₂ values; and accordingly, creating a change graph and calculating its slope so that voltage-dependent slope change is controlled.

14. A method according to any of the claims 11 to 13, **characterized in that** the method comprises the steps of: after the water inside the first reservoir (1) reaches the hardness value determined by the user, decreasing the voltage value by the control unit and keeping the water constant at the desired hardness value.

15. A method according to claim 12, **characterized in that** the method comprises the steps of: evaluating the slopes of said curves by the control unit and calculating the maximum pH, ORP and dissolved H₂ values that can be reached in a certain period of time and/or calculating the time required to reach the values desired by the user, and informing the user by means of the warning unit.

## Patentansprüche

1. Wasserspender (S) mit Erzeugungsfunktion für alkalisches Wasser, der zur Verwendung in einem Kühlgerät mit wenigstens einem Kühlfach und wenigstens einer Tür (K) geeignet ist, die Zugriff auf das Kühlfach erlaubt, so dass der Wasserspender (S) an einer Innenseite der Tür (K) dem Kühlfach zugewandt positioniert ist, **dadurch gekennzeichnet, dass** der Wasserspender ausweist: wenigstens ein erstes Reservoir (1), das zur Befüllung mit Wasser geeignet ist; wenigstens ein zweites Reservoir (2), das zur Befüllung mit Wasser geeignet ist und sich in einem unteren Teil des ersten Reservoirs befindet, wobei das Reservoir (2) durch den Benutzer an der Tür befestigt und davon gelöst werden kann; wenigstens eine Elektrolyseeinheit (4), die sich zwischen dem ersten Reservoir (1) und dem zweiten Reservoir (2) befindet und die aufweist:
o wenigstens eine Wasserdurchgang blockierende Membran (4c), um Wasser in dem ersten Reservoir (1) und dem zweiten Reservoir (2) daran zu hindern, sich miteinander zu vermischen, während der Durchgang von H⁺-Ionen zwischen dem ersten Reservoir (1) und dem zweiten Reservoir (2) möglich ist,
o wenigstens eine Kathode (4a), die an einer dem ersten Reservoir (1) zugewandten Seite der Membran (4c) positioniert ist, um so in Kontakt mit dem Wasser innerhalb des ersten Reservoirs (1) zu sein, und
o wenigstens eine Anode (4b), die an einer dem zweiten Reservoir (2) zugewandten Seite der Membran (4c) positioniert ist, um so in Kontakt mit dem Wasser innerhalb des zweiten Reservoirs (2) zu sein;
wenigstens einer Energiequelle, die in Verbindung mit der Anode (4b) und der Kathode (4a) steht und die Spannung an die Anode (4b) und die Kathode (4a) mit den gleichen oder verschiedenen, konstanten oder variierenden Werten anlegt, um im Wasser innerhalb des ersten Reservoirs (1) und des zweiten Reservoirs (2) eine Elektrolysereaktion hervorzurufen, um im ersten Reservoir (1) alkalisches Wasser zu erzeugen, wobei an der Anode (4b) erzeugte H⁺-Ionen sich durch die Membran (4c) zu der Kathode (4a) hin bewegen können;
wenigstens eine Entladungseinheit (3) zum Entladen des innerhalb des ersten Reservoirs (1) gebildeten alkalischen Wassers;
wenigstens eine Eingabeeinheit, die es dem Benutzer ermöglicht, einen Härtewert auszuwählen, wobei der Härtewert definiert ist als einer von dem gewünschten pH-Wert des Wassers, dem Redox-Wert, dem Betrag des H⁺-Ionenwertes und der gelösten H₂-Werte, und um einen Erzeugungsprozess für alkalisches Wasser auszulösen;
wenigstens einen ersten Sensor, der sich in dem ersten Reservoir (1) befindet und der die Messung eines Betrages von H⁺-Ionen, des pH-Wertes, des Redox-Wertes oder der gelösten H₂-Werte in dem Wasser im ersten Reservoir (1) erlaubt; und wenigstens eine Steuereinheit, die in Verbindung mit der Eingabeeinheit und dem ersten Sensor steht und die die Energiequelle basierend auf den von der Eingabeeinheit und dem ersten Sensor erhaltenen Daten steuert, so dass der Wert der H⁺-lonen, der pH-Wert, der Redox-Wert oder die gelösten H₂-Werte innerhalb des ersten Reservoirs eingestellt werden.

2. Wasserspender (S) nach Anspruch 1, **dadurch gekennzeichnet, dass** der Wasserspender (S) wenigstens einen dritten Sensor zur Messung von pH-, Redox-, und/oder Kontaminationswerten des innerhalb des zweiten Reservoirs (2) gebildeten sauren Wassers aufweist, wobei der dritte Sensor in Verbindung mit der Steuereinheit steht, so dass die Steuereinheit den Benutzer mittels wenigstens einer Warneinheit des Kühlgerätes akustisch und/oder schriftlich informiert, wenn der empfangene Messwert einen Schwellenwert überschreitet.

3. Wasserspender (S) nach Anspruch 2, **dadurch gekennzeichnet, dass** der Wasserspender (S) wenigstens eine Pumpe aufweist, die in Verbindung mit dem zweiten Reservoir (2) und der Steuereinheit steht und die es ermöglicht, das Wasser innerhalb des zweiten Reservoirs (2) aus dem zweiten Reservoir (2) basierend auf einem von der Steuereinheit gesendeten Befehl zu entfernen, wenn der von dem dritten Sensor empfangene Messwert den Schwellenwert überschreitet.

4. Wasserspender (S) nach einem der vorhergehenden Ansprüche, **dadurch gekennzeichnet, dass** der Wasserspender (S) wenigstens ein Ventil (7), das sich zwischen dem ersten Reservoir (1) und dem zweiten Reservoir (2) befindet und das in Verbindung mit der Steuereinheit steht, und wenigstens einen zweiten Sensor (8) zum Überwachen des Wasserstands innerhalb des zweiten Reservoirs (2) aufweist, wobei der zweite Sensor (8) mit der Steuereinheit verbunden ist, so dass das zweite Reservoir (2) mit Wasser aus dem ersten Reservoir (1) durch Aktivieren des wenigstens einen Ventils (7) durch die Steuereinheit aufgefüllt werden kann, wenn der Wasserstand innerhalb des zweiten Reservoirs (2) unter einen Schwellenwert abfällt.

5. Wasserspender (S) nach Anspruch 4, **dadurch gekennzeichnet, dass** der Wasserspender (S) wenigstens einen vierten Sensor aufweist, der in Verbindung mit der Steuereinheit ist und der Steuereinheit ein Warnsignal sendet, sobald das zweite Reservoir (2) entfernt wird.

6. Wasserspender (S) nach einem der vorhergehenden Ansprüche, **dadurch gekennzeichnet, dass** das zweite Reservoir (2) über ein zweites Ventil, das von der Steuereinheit steuerbar ist, mit dem Wasserversorgungsnetz in Verbindung steht.

7. Wasserspender (S) nach einem der vorhergehenden Ansprüche, **dadurch gekennzeichnet, dass** der Wasserspender (S) wenigstens ein Flüssigkeit absorbierendes Material (4e) aufweist, das sich zwischen der Anode (4b) und dem Boden des zweiten Reservoirs (2) befindet und das durch den Benutzer an dem zweiten Reservoir (2) angebracht oder davon entfernt werden kann.

8. Wasserspender (S) nach einem der vorhergehenden Ansprüche, **dadurch gekennzeichnet, dass** der Wasserspender (S) wenigstens eine Wasserverteilungseinheit aufweist, die sich an dem zweiten Reservoir (2) befindet und die es dem Wasser am Boden des zweiten Reservoirs (2) ermöglicht, auf die Anode (4b) zu gelangen.

9. Wasserspender (S) nach einem der vorhergehenden Ansprüche, **dadurch gekennzeichnet, dass** die Anode (4b) in Bezug auf die Bodenebene des zweiten Reservoirs so positioniert ist, dass zwischen der dem Boden des zweiten Reservoirs zugewandten Oberfläche der Anode und der Bodenebene ein Winkel (9) größer als 0° und kleiner als 90° vorhanden ist.

10. Wasserspender (S) nach einem der vorhergehenden Ansprüche, **dadurch gekennzeichnet, dass** der Wasserspender (S) wenigstens einen Gasfördermechanismus aufweist, der sich an dem ersten Reservoir (1) befindet und der es ermöglicht, an der Anode (4b) gebildetes O₂-Gas zu dem Kühlfach zu liefern.

11. Verfahren, das zur Verwendung eines Wasserspenders gemäß einem der vorhergehenden Ansprüche geeignet ist, **dadurch gekennzeichnet, dass** es die Schritte aufweist: Füllen des ersten Reservoirs (1) und des zweiten Reservoirs (2) mit Wasser und Auswählen eines Härtewertes durch den Benutzer über die Eingabeeinheit, wobei der Härtewert definiert ist als einer von dem gewünschten pH-Wert des Wassers, dem Redox-Wert, dem Betrag des H⁺-Ionenwerts und der gelösten H₂-Werte, und Aktivieren eines Erzeugungsprozesses für alkalisches Wasser; Überwachen der von dem ersten Sensor empfangenen Daten durch die Steuereinheit, wobei die Daten der pH-Wert, der Redox-Wert, der H⁺-Ionenwert oder die gelösten H₂-Werte sind, und Ermöglichen, dass an die Anode (4b) und die Kathode (4a) eine Spannung mit den gleichen oder verschiedenen, konstanten oder variieren Werten durch die Energiequelle basierend auf den von dem ersten Sensor empfangenen Daten angelegt wird und dadurch eine Elektrolysereaktion im Wasser innerhalb des ersten Reservoirs (1) und des zweiten Reservoirs (2) erzeugt wird; Erzeugen von alkalischem Wasser in dem ersten Reservoir (1), wobei H⁺-lonen, die an der Anode gebildet werden, durch die Membran (4c) zu der Kathode (4a) wandern; und, nach Maßgabe von den von dem ersten Sensor empfangenen und durch die Steuereinheit überwachten Daten, Beenden des Prozesses, indem die Energiequelle abgeschaltet wird, wenn eine gewünschte Härte erreicht ist.

12. Verfahren nach Anspruch 11, **dadurch gekennzeichnet, dass** das Verfahren die Schritte aufweist: Aufzeichnen der momentan über den ersten Sensor empfangenen Daten durch die Steuereinheit; Erzeugen von Veränderungskurven der pH-, Redox-, und/oder gelösten H₂-Werte des Wassers im ersten Reservoir (1) basierend auf diesen Daten; Berechnen und Steuern der Steigungen der Kurven, und, basierend auf den erhaltenen Steigungsdaten, Steuern, ob die pH-, Redox- und gelösten H₂-Werte konstant bleiben; und den Benutzer Warnen, wenn die Steigung unterhalb eines Schwellenwertes ist.

13. Verfahren nach einem der Ansprüche 11 oder 12, **dadurch gekennzeichnet, dass** das Verfahren die Schritte aufweist: Überwachen der Änderungen des von der Energiequelle gelieferten Spannungswertes und der pH-, Redox- und gelösten H₂-Werte durch die Steuereinheit; und demgemäß Erzeugen eines Veränderungsgraphen und Berechnen seiner Steigung, so dass die spannungsabhängige Steigungsänderung gesteuert wird.

14. Verfahren nach einem der Ansprüche 11 bis 13, **dadurch gekennzeichnet, dass** das Verfahren die Schritte aufweist: nachdem das Wasser im ersten Reservoir (1) den von dem Benutzer bestimmten Härtewert erreicht hat, Reduzieren des Spannungswertes durch die Steuereinheit und Konstanthalten des Wassers auf dem gewünschten Härtewert.

15. Verfahren nach Anspruch 12, **dadurch gekennzeichnet, dass** das Verfahren die Schritte aufweist: Bewerten der Steigungen der Kurven durch die Steuereinheit und Berechnen der Maxima der pH-, Redox- und gelösten H₂-Werte, die in einer bestimmten Zeitperiode erreicht werden können, und/oder Berechnen der erforderlichen Zeit, um die von dem Benutzer gewünschten Werte zu erreichen, und Informieren des Benutzers mittels der Warneinheit.

## Revendications

1. Distributeur d'eau (S) avec une fonction de production d'eau alcaline, qui est approprié pour une utilisation dans un dispositif de réfrigération ayant au moins un compartiment de réfrigération et au moins une porte (K) pour permettre l'accès dans le compartiment de réfrigération, de sorte que le distributeur d'eau (S) est positionné au niveau d'un côté intérieur de la porte (K) faisant face au compartiment de réfrigération, **caractérisé en ce qu'**il comprend : au moins un premier réservoir (1) adapté pour être rempli d'eau ; au moins un deuxième réservoir (2) adapté pour être rempli d'eau et situé dans une partie inférieure du premier réservoir (1), dans lequel le deuxième réservoir (2) peut être fixé et retiré par l'utilisateur à ladite porte (K) ; au moins une unité d'électrolyse (4) qui est située entre le premier réservoir (1) et le deuxième réservoir (2) et comprend :
o au moins une membrane (4c) bloquant le passage d'eau pour empêcher l'eau du premier réservoir (1) et du deuxième réservoir (2) de se mélanger l'une à l'autre tout en permettant à l'ion H⁺ de passer entre le premier réservoir (1) et le deuxième réservoir (2),
o au moins une cathode (4a) positionnée sur un côté de la membrane (4c) faisant face au premier réservoir (1) de manière à entrer en contact avec l'eau à l'intérieur du premier réservoir (1), et
o au moins une anode (4b) positionnée sur un côté de la membrane (4c) faisant face au deuxième réservoir (2) de manière à entrer en contact avec l'eau à l'intérieur du deuxième réservoir (2) ;
au moins une source d'énergie qui est en connexion avec l'anode (4b) et la cathode (4a) et applique une tension à l'anode (4b) et à la cathode (4a) à des valeurs identiques ou différentes, constantes ou variables pour générer une réaction d'électrolyse dans l'eau à l'intérieur du premier réservoir (1) et du deuxième réservoir (2) pour produire de l'eau alcaline dans le premier réservoir (1), dans lequel les ions H⁺ formés à l'anode (4b) peuvent se déplacer à travers la membrane (4c) vers la cathode (4a) ;
au moins une unité de décharge (3) pour décharger l'eau alcaline formée à l'intérieur du premier réservoir (1) ; au moins une unité d'entrée qui permet à l'utilisateur de sélectionner une valeur de dureté, dans lequel la valeur de dureté est définie comme une des valeurs suivantes : la valeur de pH souhaitée de l'eau, la valeur ORP, la quantité d'ions H⁺ et les valeurs de H₂ dissous, et d'activer un processus de production d'eau alcaline ; au moins un premier capteur qui est situé dans le premier réservoir (1) et permet de mesurer une quantité d'ions H⁺, le pH, la valeur ORP ou les valeurs de H₂ dissous dans l'eau à l'intérieur du premier réservoir (1) ; et
au moins une unité de commande qui est en connexion avec l'unité d'entrée et le premier capteur et qui commande la source d'énergie sur la base des données reçues de l'unité d'entrée et du premier capteur de sorte que la quantité d'ions H⁺, le pH, la valeur ORP ou les valeurs de H₂ dissous à l'intérieur du premier réservoir sont ajustés.

2. Distributeur d'eau (S) selon la revendication 1, **caractérisé en ce que** le distributeur d'eau (S) comprend au moins un troisième capteur pour mesurer le pH, la valeur ORP et/ou les valeurs de contamination de l'eau acide formée à l'intérieur du deuxième réservoir (2), le troisième capteur étant en connexion avec l'unité de commande de sorte que l'unité de commande informe l'utilisateur de manière audio et/ou écrite au moyen d'au moins une unité d'avertissement du dispositif de réfrigération, si la valeur de mesure reçue dépasse une valeur seuil.

3. Distributeur d'eau (S) selon la revendication 2, **caractérisé en ce que** le distributeur d'eau (S) comprend au moins une pompe qui est en connexion avec le deuxième réservoir (2) et l'unité de commande et permet à l'eau à l'intérieur du deuxième réservoir (2) d'être évacuée hors du deuxième réservoir (2) sur la base d'une commande envoyée par l'unité de commande, si la valeur de mesure reçue par le troisième capteur dépasse la valeur seuil.

4. Distributeur d'eau (S) selon l'une quelconque des revendications précédentes, **caractérisé en ce que** le distributeur d'eau (S) comprend au moins une vanne (7) qui est située entre le premier réservoir (1) et le deuxième réservoir (2) et est en connexion avec l'unité de commande, et au moins un deuxième capteur (8) pour commander le niveau d'eau à l'intérieur du deuxième réservoir (2), le deuxième capteur (8) étant en liaison avec l'unité de commande de sorte que l'eau peut être complétée à partir du premier réservoir (1) vers le deuxième réservoir (2) en activant au moins une vanne (7) par l'unité de commande lorsque le niveau d'eau à l'intérieur du deuxième réservoir (2) diminue en dessous d'une valeur seuil.

5. Distributeur d'eau (S) selon la revendication 4, **caractérisé en ce que** le distributeur d'eau (S) comprend au moins un quatrième capteur qui est en connexion avec l'unité de commande et transmet un signal d'avertissement à l'unité de commande dès que le deuxième réservoir (2) est retiré.

6. Distributeur d'eau (S) selon l'une quelconque des revendications précédentes, **caractérisé en ce que** le deuxième réservoir (2) est en liaison avec un réseau d'eau par l'intermédiaire d'une deuxième vanne commandable par l'unité de commande.

7. Distributeur d'eau (S) selon l'une quelconque des revendications précédentes, **caractérisé en ce que** le distributeur d'eau (S) comprend au moins un matériau absorbant les liquides (4e) qui est situé entre l'anode (4b) et la base du deuxième réservoir (2) et qui peut être fixé et retiré par l'utilisateur au deuxième réservoir (2).

8. Distributeur d'eau (S) selon l'une quelconque des revendications précédentes, **caractérisé en ce que** le distributeur d'eau (S) comprend au moins une unité de distribution d'eau qui est située au niveau du deuxième réservoir (2) et permet de délivrer l'eau à la base du deuxième réservoir (2) sur l'anode (4b).

9. Distributeur d'eau (S) selon l'une quelconque des revendications précédentes, **caractérisé en ce que** l'anode (4b) est positionnée par rapport au plan de fond du deuxième réservoir de telle sorte qu'il existe un angle (9) supérieur à 0° et inférieur à 90° entre la surface de l'anode tournée vers le fond du deuxième réservoir et le plan de fond.

10. Distributeur d'eau (S) selon l'une quelconque des revendications précédentes, **caractérisé en ce que** le distributeur d'eau (S) comprend au moins un mécanisme de décharge de gaz qui est situé au niveau du premier réservoir (1) et permet de délivrer l'O₂ tel que formé dans l'anode (4b) au compartiment de réfrigération.

11. Procédé adapté à l'utilisation d'un distributeur d'eau (S) selon l'une quelconque des revendications précédentes, **caractérisé en ce qu'**il comprend les étapes consistant à : remplir le premier réservoir (1) et le deuxième réservoir (2) avec de l'eau et sélectionner une valeur de dureté par l'utilisateur via l'unité d'entrée, dans lequel la valeur de dureté est définie comme une valeur parmi la valeur de pH souhaitée de l'eau, la valeur ORP, la valeur de quantité d'ions H⁺ et les valeurs de H₂ dissous, et activer un processus de production d'eau alcaline ; surveiller, par l'unité de commande, les données reçues du premier capteur, dans lequel lesdites données sont le pH, l'ORP, la quantité d'ions H⁺ ou les valeurs de H₂ dissous, et permettre à
une tension à appliquer à l'anode (4b) et à la cathode (4a) à des valeurs identiques ou différentes, constantes ou variables, par la source d'énergie sur la base des données reçues du premier capteur, et ainsi, créer une réaction d'électrolyse au niveau de l'eau à l'intérieur du premier réservoir (1) et du deuxième réservoir (2) ; produire de l'eau alcaline dans le premier réservoir (1) dans lequel les ions H+, qui sont formés au niveau de l'anode (4b), traversent la membrane (4c) vers la cathode (4a) ; et selon les données reçues du premier capteur surveillé par l'unité de commande, terminer le processus en coupant la source d'énergie lorsqu'une dureté souhaitée est atteinte.

12. Procédé selon la revendication 11, **caractérisé en ce que** le procédé comprend les étapes consistant à : enregistrer, par l'unité de commande, les données reçues instantanément via le premier capteur ; créer des courbes de changement des valeurs de pH, ORP et/ou H₂ dissous de l'eau à l'intérieur du premier réservoir (1) sur la base de ces données ; calculer et commander les pentes des courbes, et sur la base des données de pente obtenues, commander si les valeurs de pH, ORP et H₂ dissous restent constantes ; et avertir l'utilisateur si la pente est inférieure à une valeur seuil.

13. Procédé selon l'une quelconque des revendications 11 ou 12, **caractérisé en ce que** le procédé comprend les étapes consistant à : surveiller, par l'unité de commande, le changement de la valeur de tension fournie par la source d'énergie et des valeurs de pH, ORP et H₂ dissous ; et en conséquence, créer un graphique de changement et calculer sa pente de sorte que le changement de pente dépendant de la tension soit commandé.

14. Procédé selon l'une quelconque des revendications 11 à 13, **caractérisé en ce que** le procédé comprend les étapes consistant à : après que l'eau à l'intérieur du premier réservoir (1) a atteint la valeur de dureté déterminée par l'utilisateur, diminuer la valeur de tension par l'unité de commande et maintenir l'eau constante à la valeur de dureté souhaitée.

15. Procédé selon la revendication 12, **caractérisé en ce que** le procédé comprend les étapes consistant à : évaluer les pentes desdites courbes par l'unité de commande et calculer les valeurs maximales de pH, ORP et H₂ dissous qui peuvent être atteintes dans une certaine période de temps et/ou calculer le temps nécessaire pour atteindre les valeurs souhaitées par l'utilisateur, et informer l'utilisateur au moyen de l'unité d'avertissement.
